# EUROPEAN PATENT SPECIFICATION

(11) **EP 3 714 250 B1**
(45) Date of publication and mention of the grant of the patent: **04.08.2021**
(21) Application number: 18816266.3
(22) Date of filing: 26.10.2018
(51) Int. Cl.: G01N 1/36, G01N 1/06

(54) **DISPOSABLE PROCESS CHAMBER FOR PROCESSING BIOLOGIC MATERIAL**
EINWEG-PROZESSKAMMER ZUR VERARBEITUNG VON BIOLOGISCHEM MATERIAL
CHAMBRE DE TRAITEMENT JETABLE POUR TRAITER UN MATÉRIAU BIOLOGIQUE

(30) Priority: 23.11.2017 IT 201700134601
(43) Date of publication of application: 30.09.2020
(73) Proprietor: Cometto, Sergio, 10090 Sangano (TO) (IT); Serra, Marisa, 10090 Sangano (TO) (IT)
(72) Inventor: Cometto, Sergio, 10090 Sangano (TO) (IT); Serra, Marisa, 10090 Sangano (TO) (IT)
(74) Representative: Garavelli, Paolo
(86) International application number: PCT/IT2018/000138
(87) International publication number: WO 2019/102504

(56) References cited:
- EP-A2- 1 321 757
- EP-A2- 2 778 654
- US-A- 3 554 433
- US-A1- 2010 075 410
- US-A1- 2017 052 096

## Description

The present invention refers to a disposable process chamber usable for processing biologic material. In particular, the invention refers to a disposable process chamber for processing histologic samples, usable for processing individual samples.

Processing devices of biologic material are known, configured for processing samples of material inserted in suitable boxes; known processing devices are equipped with a process chamber, in which baskets are inserted, inside which a plurality of boxes are placed, which are processed simultaneously inside the process chamber.

Patent application US3554433 discloses an example of a prior art tissue container for embedding a histologic specimen.

The processing treatment provides for the following three major steps, which are performed in the process chamber, on samples of biologic material contained in the boxes: Dehydration, in which the samples of biologic material are dehydrated, for example through successive passes in alcohol solutions at increasing concentrations; Clarification, in which the dehydrated samples are immersed in clarifying or diaphanizing substances, for example xylene or benzene; Infiltration or inclusion, in which the clarified samples are infiltrated with materials operating as support, such as paraffin, penetrating into the tissue as replacement of the clarifying substance.

The sample of biologic material infiltrated by paraffin is then extracted from the box and inserted in a shaped container, containing for example melted paraffin, which is afterwards cooled in order to obtain small blocks of paraffin in which the sample of biologic material is embedded, which is afterwards cut with a microtome into sufficiently thin sections to be crossed by light and observed with optical microscopes.

These known boxes and processing devices of biologic material, however, are not satisfactory and have the problem that, since the samples, contained in a plurality of boxes, are processed simultaneously, it is difficult to control the process inside the individual box, with the risk of obtaining a not optimum processing quality for all samples, with impacts on their integrity and on the chance of performing the following exams.

Another problem is caused by the need of using two different types of containers: first of all, the box containing the sample of biologic material to be processed, and afterwards the shaped container to perform the cutting with microtome, with the consequent need of moving the samples of material from one container to another, causing an increase of costs and an increase of process times.

Object of the present invention is solving the above prior art problems, by providing a disposable process chamber for processing biologic material, which allows independently processing individual samples of biologic material, improving the control of processing parameters and speeding up the process.

The above and other objects and advantages of the invention, as will appear from the following description, are obtained with a disposable process chamber for processing biologic material as claimed in Claim 1. Preferred embodiments and non-trivial variations of the present invention are the subject matter of the dependent claims.

It is intended that all enclosed claims are an integral part of the present description.

It will be immediately obvious that numerous variations and modifications (for example related to shape, sizes and arrangements) can be made to what is described, without departing from the scope of the invention as appears in the enclosed claims.

The present invention will be better described by some preferred embodiments thereof, provided as a non-limiting example, with reference to the enclosed drawings, in which:

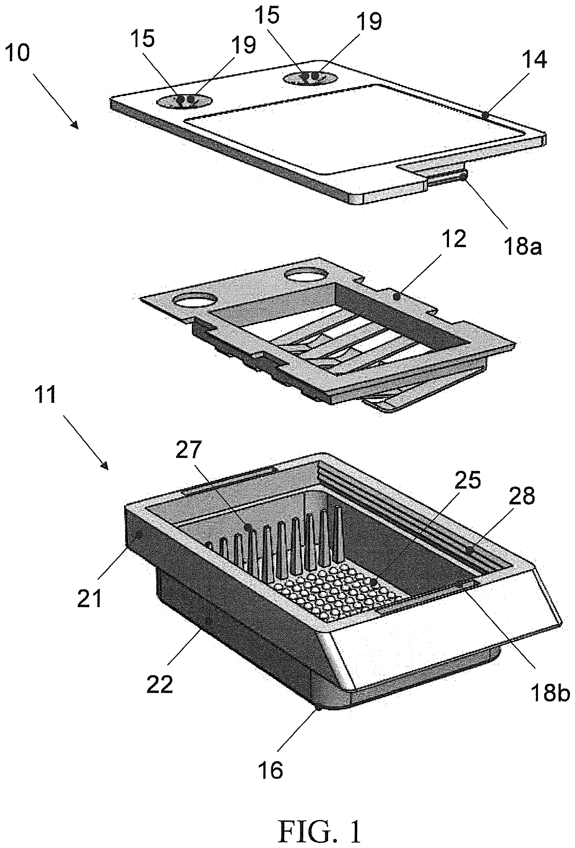

- Figure 1 shows an exploded view of a disposable process chamber for processing biologic material according to the present invention;
- Figure 2 shows a perspective view of a component of a disposable process chamber for processing biologic material according to the present invention;

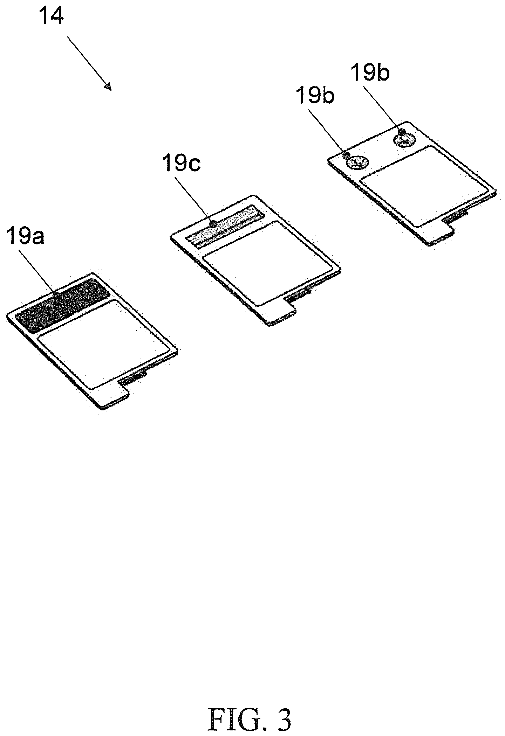

- Figure 3 shows perspective views of embodiments of a component of a disposable process chamber for processing biologic material according to the present invention;

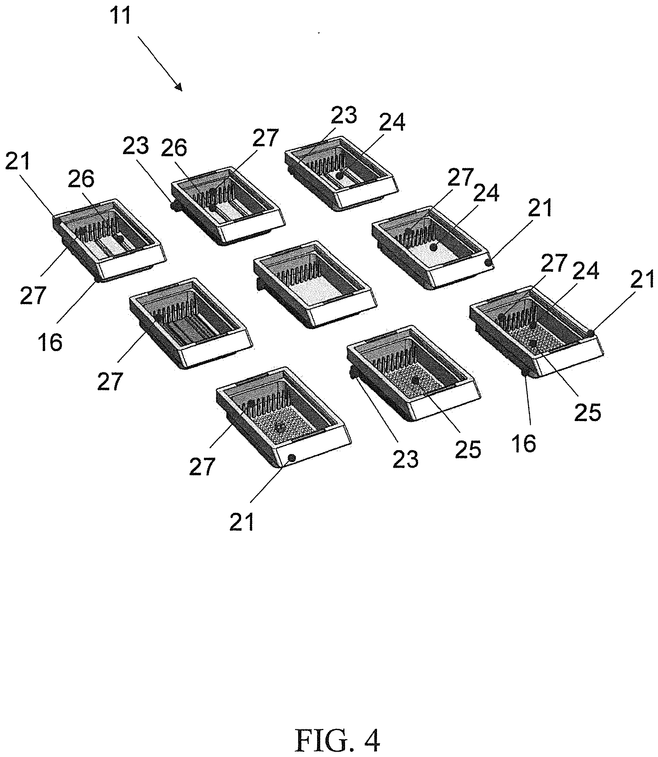

- Figure 4 shows a perspective view of embodiments of a component of a disposable process chamber for processing biologic material according to the present invention;

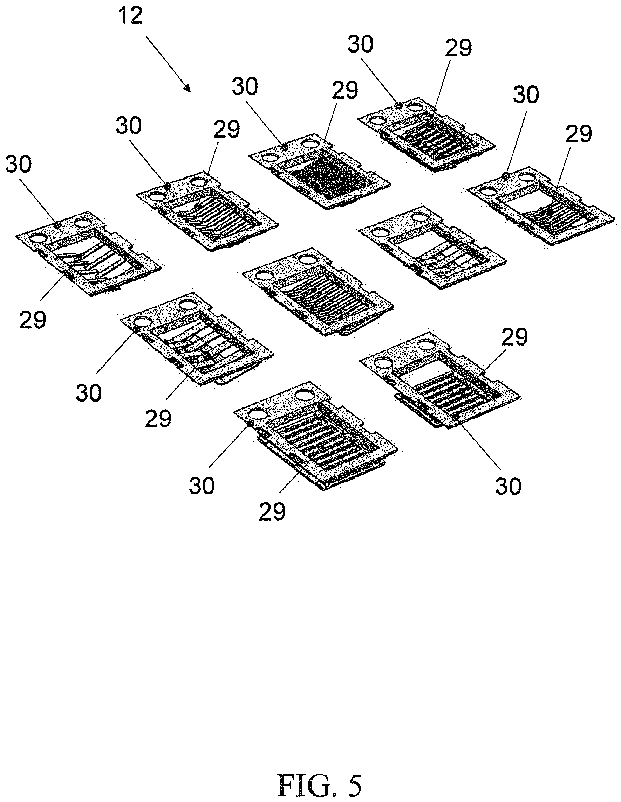

- Figure 5 shows a perspective view of embodiments of a component of a disposable process chamber for processing biologic material according to the present invention; and

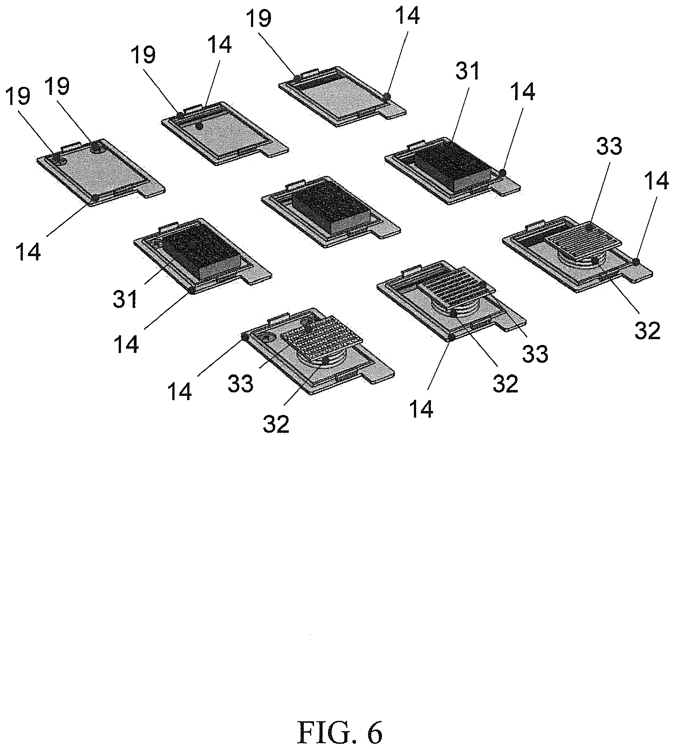

- Figure 6 shows a perspective view of embodiments of a component of a disposable process chamber for processing biologic material according to the present invention.

With reference to the Figures, the disposable process chamber 10 for processing biologic material of the invention comprises a containing body 11 configured for housing the biologic material to be processed, holding means 12 configured for holding the biologic material to be processed in the containing body 11 to prevent its movement, closing means 14 configured to be associated with liquid seal to the containing body 11, and access means 15 configured to allow introducing and removing liquids in and from the disposable process chamber 10.

Preferably, the containing body 11 is made in a single piece and comprises an upper part 21, configured for housing the closing means 14, and a removable base 16 to allow, at the end of an embedding phase, accessing to the embedded biologic material, for example in solidified paraffin, and perform the cutting, for example with microtome, once having removed the removable base 16.

The removable base 16 is configured to be separated from the containing body 11, preferably from its upper part 21.

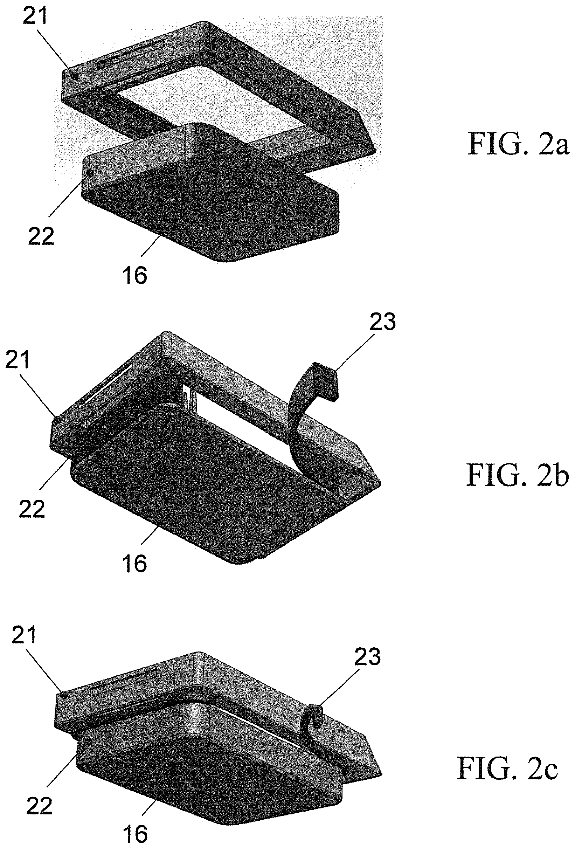

As shown in the example embodiments of Figure 2, the containing body 11 comprises a connecting edge 22 of the removable base 16 to the upper part 21, and the removable base 16 is configured to be separated from the upper part 21 of the containing body 11 through cutting, performed with a dedicated tool, or through partial or total removal of the connecting edge 22; preferably, the connecting edge 22 is removed by manually acting on a tongue 23 connected to the connecting edge 22.

In a preferred way, to enable the removal of the removable base 16, a breakage line is obtained between the connecting edge 22 and the removable base 16 and between the connecting edge 22 and the upper part 21, for example through an engraving or with partial cuts, along which it is configured to perform the separation of the connecting edge 22, to allow removing the removable base 16.

Preferably, the upper surface 24 of the base, internal to the process chamber 10 and configured for housing the sample of biologic material to be processed, has projections 25, for example shaped as a sphere, configured for facilitating the passage of liquid under the sample of biologic material, or recesses 26, configured for facilitating the housing of a sample of biologic material in the containing body 11.

In a preferred way, the closing means 14 comprise first fastening means 18a, configured to cooperate with corresponding second fastening means 18b obtained on the containing body 11 for closing, with liquid seal, the closing means 14 on the containing body 11 and preventing the exit and/or evaporation of reagents and of paraffin from the disposable process chamber 10; preferably, the first fastening means 18a and the second fastening means 18b are configured for unmovably closing the closing means 14 on the containing body 11, in order to prevent its manual opening, for example requiring the use of a suitable tool for opening the disposable process chamber 10.

For example, the first fastening means 18a and the second fastening means 18b are composed of tongues and slits, and the closing means 14 are a cover, manually unmovable when it is closed on the containing body 11, which can include the identification of the sample of biologic material contained in the disposable process chamber 10.

The access means 15 obtained in the closing means 14 comprise at least one sealing element 19 configured for preventing the exit and/or evaporation of liquid, for example of reagent or of paraffin, contained in the disposable process chamber 10, and are configured to allow accessing to the injecting and sucking means, for example needles connected to a pumping element, for depositing and withdrawing the liquid, for example liquid reagents or paraffin.

For example, the sealing element 19 is composed of at least one pre-drilled diaphragm, on which the access holes of the injecting and sucking means are obtained, for depositing the reagent and the paraffin, for example a single diaphragm 19a on which two holes, or two diaphragms 19b are obtained, each having a hole, or a diaphragm 19c obtained with two facing tongues, for which accessing of the injecting and sucking means is performed between the two tongues.

In order to hole and contain the sample in a delimited area, the containing body 11 comprises a barrier 27, made for example of a plurality of flanked projecting elements, configured for protecting the access area of the injecting and sucking means, for example of the needles for depositing and withdrawing the reagent, and configured to guarantee the passage of the reagent and at the same time operate as containing barrier of the sample.

Preferably, the holding means 12 are associated with the closing means 14 and/or the containing body 11 and are configured for holding the material between the closing means 14 and the containing body 11, preferably between the closing means 14 and the removable base 16.

Preferably, the upper part 21 of the containing body 11 is configured for holding the holding means 12; for example, the holding means 12 are abutted on grooves 28 made in the upper part 21 of the containing body 11, to regulate their position and avoid compressing and damaging the biologic material contained in the disposable process chamber 10; alternatively, the holding means 12 can be connected, preferably fastened, to the closing means 14.

Preferably, the holding means 12 comprise elastic means 29, 31, 32 connected to the cover or abutted onto the containing body 11, for example composed of leaf springs 29 collected to a support 30 kept between the closing means 14, composed for example of a cover, and the containing body 11, preferably abutted onto the grooves 28; the elastic means 29 can comprise a sponge 31 directly fastened to the closing means 14 or a spring 32 connected to a pushing element 33 and the closing means 14, composed for example of a cover.

The operation of the disposable process chamber 10 for processing biologic material of the invention will now be described.

The disposable process chamber according to the invention allows processing a histologic sample in all phases (Dehydration, Clarification, Infiltration or inclusion) and is designed to be able to embed the sample in order to make it available for the following working steps.

The disposable process chamber of the invention is composed of many components, which allow: housing the sample (containing body 11), holding the sample (holding means 12) and sealing it (closing means 14).

Actually, the suitably positioned sample is kept in the chosen position till the completion of the embedding phase. The operation of introducing and removing the liquids (reagents, paraffin) are performed through the injecting and sucking means, for example the needles, which are inserted through access means, for example specific orifices placed on the closing means 14, for example composed of the cover.

At the end of the embedding phase, the disposable process chamber protected the sample inside; through the removal of the removable base 16, the sample embedded into paraffin is afterwards accessed.

Advantageously, the disposable process chamber of the invention allows:
- processing the histologic sample separately from all other, to avoid cross-contamination with customized protocol depending on its physical-dimensional features, and therefore increase the processing quality at levels which so far had never been obtained;
- monitoring the behaviour of every single process step, analysing, for example through the electrodes embedded in the walls of the disposable process chamber, one or more physical parameters (for example, reagent status with reference to the exchange of liquids with the sample) in real time during the processing; this allows optimizing the times and guaranteeing that there are no situations of under- or over-processing;
- at the operator's discretion, processing the sample depending on the actual priority, for example in case of urgency for immediate diagnoses;
- embedding the sample into paraffin, cooling it and making it ready for cutting with microtome, thereby automatizing the inclusion (or embedding) step;
- dosing the reagents in a calibrated way depending on the sizes of the sample to be able to always use new reagents and further increase the quality and above all the repeatability of the result, due to the fact that the samples, in known processing devices, are processed in numerous groups, the reagents are re-used a certain number of times with medium quality results having a non-constant repeatability;
- using traditional or special reagents or a mix thereof, deciding sample by sample which reagents to use for processing.

## Claims

1. Disposable process chamber (10) for processing biologic material comprising:
- a containing body (11) configured for housing the biologic material to be processed;
- holding means (12) configured for holding the biologic material to be processed in the containing body (11) to prevent its movement;
- closing means (14) configured to be associated with liquid seal to the containing body (11); and
- access means (15), obtained in the closing means (14) and configured to allow introducing and removing liquids in the disposable process chamber (10), the containing body (11) comprising an upper part (21) configured for housing the closing means (14), and a removable base (16) to allow, at the end of an embedding phase, accessing to the embedded biologic material and performing its cutting, once having removed the removable base (16), **characterized in that** the access means (15) comprise at least one sealing element (19) configured for preventing the exit and/or evaporation of liquid contained in the disposable process chamber (10) and are configured to allow accessing to injecting and sucking means for depositing and withdrawing the liquid, the sealing element (19) being composed of at least one diaphragm on which access holes of the injecting and sucking means are obtained, for depositing the liquid.

2. Disposable process chamber (10) for processing biologic material according to claim 1, **characterized in that** the containing body (11) comprises a connecting edge (22) of the removable base (16) to the upper part (21), and **in that** the removable base (16) is configured to be separated from the upper part (21) of the containing body (11) through cutting, or through a partial or total removal of the connecting edge (22).

3. Disposable process chamber (10) for processing biologic material according to claim 1 or 2, **characterized in that** the connecting edge (22) is removed by manually acting on a tongue (23) connected to the connecting edge (22).

4. Disposable process chamber (10) for processing biologic material according to any one of the previous claims, **characterized in that** the closing means (14) comprise first fastening means (18a) configured to cooperate with corresponding second fastening means (18b) made on the containing body (11) for closing, with liquid seal, the closing means (14) on the containing body (11).

5. Disposable process chamber (10) for processing biologic material according to claim 4, **characterized in that** the first fastening means (18a) and the second fastening means (18b) are configured for unmovably closing the closing means (14) on the containing body (11), in order to prevent its manual opening.

6. Disposable process chamber (10) for processing biologic material according to any one of the previous claims, **characterized in that** the holding means (12) are associated with the closing means (14) and/or the containing body (11) and are configured for holding the biologic material between the closing means (14) and the containing body (11).

7. Disposable process chamber (10) for processing biologic material according to claim 6, **characterized in that** the upper part (21) of the containing body (11) is configured for holding the holding means (12), or **in that** the holding means (12) are connected to the closing means (14).

8. Disposable process chamber (10) for processing biologic material according to claim 6 or 7, **characterized in that** the holding means (12) comprise elastic means (29, 31, 32) connected to the cover or abutted onto the containing body (11).

## Patentansprüche

1. Einweg-Prozesskammer (10) zur Verarbeitung von biologischem Material, umfassend:
- einen Rückhaltekörper (11), der zur Aufnahme des zu verarbeitenden biologischen Materials konfiguriert ist;
- Haltemittel (12), die so konfiguriert sind, dass sie das zu verarbeitende biologische Material im Sicherheitskörper (11) zurückhalten, um dessen Bewegung zu verhindern;
- Verschlussmittel (14), die so konfiguriert sind, dass sie flüssigkeitsdicht mit dem Sicherheitskörper (11) verbunden sind; und
- Zugangsmittel (15), die in den Schließmitteln (14) erhalten und konfiguriert sind, um das Einbringen und Entfernen von Flüssigkeiten in die Einweg-Prozesskammer (10) zu ermöglichen, wobei der Rückhaltekörper (11) einen oberen Teil (21) umfasst, der zum Unterbringen konfiguriert ist das Verschlussmittel (14) und eine entfernbare Basis (16), um am Ende einer Einarbeitungsphase den Zugang zu dem eingearbeiteten biologischen Material zu ermöglichen und den Schnitt durchzuführen, sobald die entfernbare Basis (16) entfernt wurde), charakterisiert in dass die Zugangsmittel (15) mindestens ein Dichtungselement (19) umfassen, das konfiguriert ist, um das Austreten und/oder Verdampfen der in der Einweg-Prozesskammer (10) enthaltenen Flüssigkeit zu verhindern, und konfiguriert sind, um den Zugang von Einspritz- und Saugmitteln zu ermöglichen zum Abscheiden und Abziehen der Flüssigkeit ist das Dichtelement (19) bestehend aus mindestens einer Membran, an der Zugangslöcher für die Einspritz- und Saugeinrichtung zum Ablegen der Flüssigkeit angebracht sind.

2. Einweg-Prozesskammer (10) zur Verarbeitung von biologischem Material nach Anspruch 1, **dadurch gekennzeichnet, dass** der Rückhaltekörper (11) eine Verbindungskante (22) der entfernbaren Basis (16) zum Oberteil (21) aufweist und **dadurch gekennzeichnet ist, dass** Die entfernbare Basis (16) ist so konfiguriert, dass sie vom oberen Teil (21) des Sicherheitskörpers (11) durch Schneiden oder durch teilweises oder vollständiges Entfernen der Verbindungskante (22) getrennt wird.

3. Einweg-Verarbeitungskammer (10) zur Verarbeitung von biologischem Material nach Anspruch 1 oder 2, **dadurch gekennzeichnet, dass** die Verbindungskante (22) durch manuelles Einwirken auf eine mit der Verbindungskante (22) verbundene Lasche (23) entfernt wird.

4. Einweg-Prozesskammer (10) zum Verarbeiten von biologischem Material gemäß einem der vorhergehenden Ansprüche, **gekennzeichnet dadurch, dass** die Verschlussmittel (14) erste Fixiermittel (18a) umfassen, die konfiguriert sind, um mit entsprechenden zweiten Fixiermitteln (18b) zusammenzuarbeiten, die an dem Sicherheitsbehälter angebracht sind Körper (11), um die Verschlusseinrichtung (14) auf dem Rückhaltekörper (11) flüssigkeitsdicht zu schließen.

5. Einweg-Prozesskammer (10) zur Verarbeitung von biologischem Material nach Anspruch 4, **dadurch gekennzeichnet, dass** die erste Fixiereinrichtung (18a) und die zweite Fixiereinrichtung (18b) konfiguriert sind, um die Schließeinrichtung (14) an dem Rückhaltekörper (14) zu schließen (11) auf unbewegliche Weise, um ein manuelles Öffnen zu verhindern.

6. Einweg-Prozesskammer (10) zur Verarbeitung von biologischem Material nach einem der vorhergehenden Ansprüche, **gekennzeichnet dadurch, dass** die Haltemittel (12) den Schließmitteln (14) und/oder dem Rückhaltekörper (11) und zugeordnet sind sind angepasst, um das biologische Material zwischen den Verschlussmitteln (14) und dem Rückhaltekörper (11) zurückzuhalten.

7. Einweg-Prozesskammer (10) zur Verarbeitung von biologischem Material nach Anspruch 6, **dadurch gekennzeichnet, dass** der obere Teil (21) des Rückhaltekörpers (11) so konfiguriert ist, dass er die Haltemittel (12) hält, oder durch die Tatsache, dass dieser Die Haltemittel (12) sind mit den Schließmitteln (14) verbunden.

8. Einweg-Prozesskammer (10) zur Verarbeitung von biologischem Material nach Anspruch 6 oder 7, **dadurch gekennzeichnet, dass** die Haltemittel (12) elastische Mittel (29, 31, 32) umfassen, die mit dem Deckel verbunden sind oder auf dem Sicherheitskörper (11) ruhen.

## Revendications

1. Chambre de traitement jetable (10) pour le traitement de matière biologique comprenant:
- un corps de confinement (11) configuré pour recevoir la matière biologique à traiter;
- des moyens de maintien (12) configurés pour retenir la matière biologique à traiter dans le corps de confinement (11) pour empêcher son mouvement;
- des moyens de fermeture (14) configurés pour être associés de manière étanche aux liquides avec le corps de confinement (11); et
- des moyens d'accès (15), obtenus dans les moyens de fermeture (14) et configurés pour permettre l'introduction et l'évacuation de liquides dans la chambre de traitement jetable (10), le corps de confinement (11) comprenant une partie supérieure (21) configurée pour loger les moyens de fermeture (14), et une base amovible (16) pour permettre, à la fin d'une phase d'incorporation, d'accéder au matériau biologique incorporé et d'effectuer la coupe, une fois la base amovible (16) retirée), caractérisé en en ce que les moyens d'accès (15) comprennent au moins un élément d'étanchéité (19) configuré pour empêcher la fuite et/ou l'évaporation du liquide contenu dans la chambre de traitement jetable (10) et sont configurés pour permettre l'accès des moyens d'injection et d'aspiration pour déposer et soutirer le liquide, l'élément d'étanchéité (19) constitué d'au moins un diaphragme sur lequel sont pratiqués des trous d'accès pour les moyens d'injection et d'aspiration pour déposer le liquide.

2. Chambre de traitement jetable (10) pour le traitement de matière biologique selon la revendication 1, **caractérisée en ce que** le corps de confinement (11) comprend un bord de liaison (22) de la base amovible (16) à la partie supérieure (21) et par le fait que la base amovible (16) est configurée pour être séparée de la partie supérieure (21) du corps de confinement (11) par découpe, ou en enlevant partiellement ou totalement le bord de liaison (22).

3. Chambre de traitement jetable (10) pour le traitement de matière biologique selon la revendication 1 ou 2, **caractérisée en ce que** le bord de liaison (22) est retiré par action manuelle sur une languette (23) reliée au bord de liaison (22).

4. Chambre de traitement jetable (10) pour le traitement de matière biologique selon l'une quelconque des revendications précédentes, **caractérisée en ce que** les moyens de fermeture (14) comprennent des premiers moyens de fixation (18a) configurés pour coopérer avec des seconds moyens de fixation correspondants (18b) réalisés sur l'enceinte de confinement. corps (11) pour fermer, de manière étanche aux liquides, les moyens de fermeture (14) sur le corps de confinement (11).

5. Chambre de traitement jetable (10) de traitement de matière biologique selon la revendication 4, **caractérisée en ce que** les premiers moyens de fixation (18a) et les seconds moyens de fixation (18b) sont configurés pour fermer les moyens de fermeture (14) sur le corps de confinement (11) de manière inamovible, de manière à empêcher l'ouverture manuelle.

6. Chambre de traitement jetable (10) de traitement de matière biologique selon l'une quelconque des revendications précédentes, **caractérisée en ce que** les moyens de maintien (12) sont associés aux moyens de fermeture (14) et/ou au corps de confinement (11) et sont adaptés pour retenir la matière biologique entre les moyens de fermeture (14) et le corps de confinement (11).

7. Chambre de traitement jetable (10) pour le traitement de matière biologique selon la revendication 6, **caractérisée en ce que** la partie supérieure (21) du corps de confinement (11) est configurée pour maintenir les moyens de maintien (12), ou par le fait que les moyens de maintien (12) sont reliés aux moyens de fermeture (14).

8. Chambre de traitement jetable (10) de traitement de matière biologique selon la revendication 6 ou 7, **caractérisée en ce que** les moyens de maintien (12) comprennent des moyens élastiques (29, 31, 32) reliés au couvercle ou reposant sur le corps de confinement (11).
